# FASCICULE DE BREVET EUROPEEN

(11) **EP 0 473 546 B1**
(45) Date de publication et mention de la délivrance du brevet: **24.05.1995**
(21) Numéro de dépôt: 91810655.0
(22) Date de dépôt: 20.08.1991
(51) Int. Cl.: F16K 3/34

(54) **Dispositif de dosage micrométrique**
Mikrometrische Dosiervorrichtung
Micrometrical dosing device

(30) Priorité: 31.08.1990 CH 2829/90
(43) Date de publication de la demande: 04.03.1992
(73) Titulaire: CYNOVA S.A., CH-1700 Fribourg (CH)
(72) Inventeur: Chavaillaz, Georges, CH-1025 St-Sulpice (CH)
(74) Mandataire: Meylan, Robert Maurice

(56) Documents cités:
- EP-A- 0 352 084
- EP-A- 0 373 123
- GB-A- 1 028 022
- GB-A- 1 288 028
- US-A- 1 586 844
- US-A- 3 517 697

## Description

La présente invention a pour objet un dispositif de dosage micrométrique comportant un corps de vanne de dosage, une entrée de matière à doser, une sortie de la matière dosée et une vanne de dosage montée à l'intérieur dudit corps entre ladite entrée et ladite sortie et susceptible d'être ouverte ou fermée.

Dans le EP-A-0 352 084 et EP-A-0 373 123, on décrit des vannes à disques superposés dont l'un des disques muni d'encoches ou ouverture est fixe et l'autre, muni d'encoches ou ouvertures similaires, peut être tourné pour régler le débit du liquide de zéro à un maximum correspondant à la superposition des encoches ou ouvertures de deux disques.

Les dispositifs de dosage micrométrique connus et le plus souvent utilisés sont commercialisés sous la dénomination de valves proportionnelles. Elles comportent un corps pourvu d'une cavité de forme générale cylindrique dans laquelle est logé un élément cylindrique mobile en translation. Cet élément comporte des gorges périphériques qui coopèrent avec des évidements ménagés dans le corps pour permettre ou interdire le passage d'une matière à doser d'un canal d'amenée vers un canal de sortie. L'étanchéité du dispositif tient à la précision de l'usinage de la cavité cylindrique du corps et de l'élément cylindrique mobile logé dans cette cavité.

On a constaté que cette étanchéité était difficile à réaliser en raison du jeu qui existe nécessairement entre la paroi du corps définissant la cavité cylindrique et la paroi extérieure de l'élément cylindrique mobile pour éviter les forces de friction trop importantes lors du déplacement de cet élément. Ce jeu est à l'origine de fuites qui faussent les résultats du dosage. Une réduction de ce jeu, qui aurait pour effet d'améliorer l'étanchéité, augmente le serrage des pièces, donc la friction et l'usure, ce qui aboutit au même résultat que précédemment, à savoir la perte d'étanchéité engendrant des fuites. Ceci constitue un inconvénient majeur de ce type de dispositif de dosage et la présente invention se propose d'apporter une solution à cet inconvénient.

Dans ce but, le dispositif de dosage selon l'invention est caractérisé en ce que ladite vanne de dosage comporte une plaque fixe pourvue d'une surface plane et équipée d'au moins un canal communiquant avec ladite sortie de matière dosée et un tiroir coulissant en translation pourvu d'une face plane disposée en appui sur ladite surface plane de la plaque fixe, ce tiroir comprenant au moins un moyen de passage agencé pour permettre l'écoulement de la matière à doser vers ledit canal de la plaque fixe, lorsqu'il se trouve dans une des positions correspondant à l'ouverture de la vanne de dosage et pour empêcher cet écoulement lorsqu'il se trouve dans une des positions correspondant à la fermeture de cette vanne, et ledit moyen de passage du tiroir comporte au moins une entaille traversante profilée, ménagée dans au moins une des faces latérales d'extrémité, dans la direction de translation de ce tiroir, reliant ladite face plane à ladite face opposée.

Ladite entaille profilée a avantageusement une section transversale au moins approximativement en forme de V.

Selon un mode de réalisation préféré, le passage du tiroir comporte, outre l'entaille traversante profilée, au moins un conduit traversant débouchant, d'une part, sur ladite face plane et, d'autre part, sur une face opposée de ce tiroir pour communiquer avec ladite entrée de matière à doser.

D'un façon préférentielle, ledit tiroir est constitué par un bloc comportant une face inférieure qui constitue ladite face plane en appui sur ladite surface plane de la plaque fixe, une face supérieure opposée à ladite face inférieure, deux faces latérales et deux faces d'extrémité comportant chacune une entaille à section transversale approximativement en forme de V.

De préférence, ledit tiroir coulissant est associé à des moyens moteurs agencés pour le déplacer linéairement dans un sens, et à un ressort de rappel agencé pour le déplacer linéairement dans le sens opposé.

De façon avantageuse, ledit bloc constituant le tiroir est monté dans une cavité centrale ménagée à l'intérieur d'un poussoir longitudinal, ce poussoir ayant une première extrémité en appui contre lesdits moyens moteurs et une deuxième extrémité en appui contre ledit ressort de rappel.

De préférence, lesdits moyens moteurs comportent un moteur électrique, mais ils peuvent aussi comporter un électro-aimant, ou des moyens pneumatiques ou hydrauliques.

Dans cette forme de réalisation, ledit bloc constituant le tiroir est monté dans ladite cavité centrale entre deux billes de centrage respectivement engagées dans les entailles profilées ménagées dans les faces d'extrémité de ce bloc.

Le dispositif selon l'invention comporte avantageusement un ressort de compression agencé pour exercer une pression sur la face supérieure plane du bloc. Ledit ressort de compression est monté entre une bague d'appui comportant une surface disposée en contact avec la surface supérieure du bloc formant ledit tiroir coulissant et une pièce pourvue d'au moins un passage de communication avec ladite entrée de matière à doser.

De préférence, la bague d'appui comporte au moins un téton de liaison agencé pour être engagé dans le conduit traversant ledit tiroir.

La présente invention sera mieux comprise en référence à la description d'un exemple de réalisation et du dessin annexé dans lequel :

La figure 1 représente une vue en coupe axiale du dispositif de dosage selon l'invention et plus exactement de la vanne de dosage montée à l'intérieur du corps de ce dispositif.

La figure 2 représente une vue de dessus du poussoir, du tiroir et des billes de centrage de ce dernier, cet ensemble étant sorti du corps du dispositif.

La figure 3 représente une vue en perspective du ressort de compression appuyant sur la face supérieure du tiroir coulissant.

Les figures 4A, 4B et 4C représentent trois positions différentes du poussoir et du tiroir coulissant par rapport aux canaux de la plaque fixe.

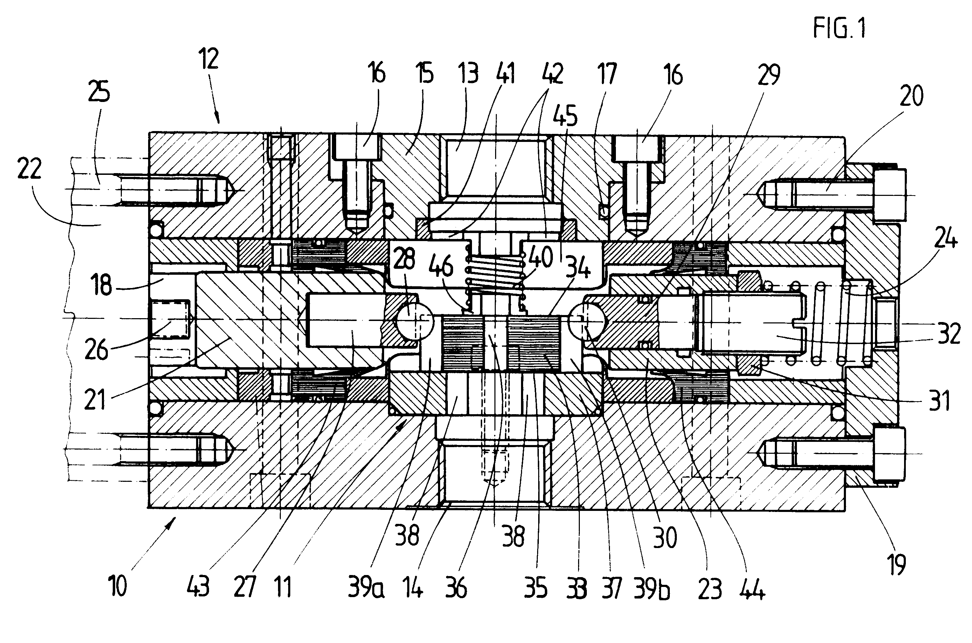

En référence à la figure 1, le dispositif de dosage 10 comporte une vanne de dosage 11 montée à l'intérieur d'un corps 12 pourvu d'une entrée 13 d'une matière à doser et d'une sortie 14 de la matière après son dosage. Cette matière à doser est généralement une substance ayant une consistance liquide ou pâteuse, mais pourrait également être constituée par une poudre dont l'écoulement est proche de celle d'un fluide.

L'entrée de matière 13 est ménagée dans un bloc 15 logé dans une cavité du corps 12 et fixé à ce dernier par des vis 16 à tête cylindrique noyée. L'étanchéité entre ce bloc et le corps est assurée par un joint torique 17. Le corps 12 est constitué d'un bloc unique pourvu d'une cavité cylindrique 18 à l'intérieur de laquelle sont montés les éléments mobiles de la vanne de dosage. Cette cavité est obturée par un couvercle latéral 19 fixé au corps 12 par des vis 20 à tête cylindrique partiellement noyée dans l'épaisseur du couvercle.

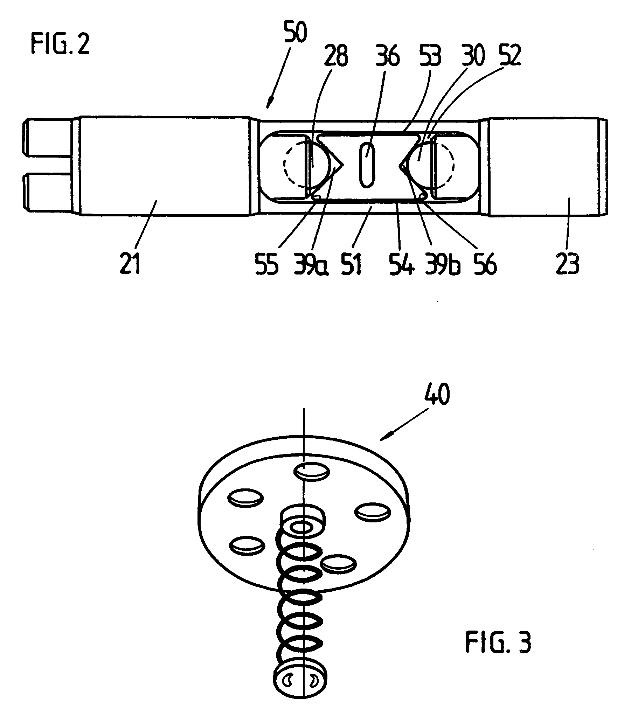

La cavité cylindrique 18 contient un poussoir longitudinal composé d'une première partie 21 associée à des moyens moteurs 22 et d'une seconde partie 23 associée à un ressort de rappel 24. Ces deux parties sont liées entre elles par une partie centrale dans laquelle est ménagé un évidement, et sont représentées de manière plus précise par la figure 2.

Dans l'exemple décrit, les moyens moteurs 22, qui sont, soit un moteur électrique, pneumatique ou hydraulique, soit un électro-aimant, sont fixés au corps 12 de la vanne de dosage au moyen de vis 25 et comportent un axe mobile 26 qui est destiné à prendre appui sur la face arrière de la première partie 21 du poussoir. Cette partie 21 du poussoir porte une butée de centrage 27 dans laquelle est montée une bille 28. De façon analogue, la deuxième partie 23 du poussoir porte une butée de centrage 29 sur laquelle est montée une bille 30. Le ressort de rappel 24 est en appui, d'une part, contre le couvercle 19 et, d'autre part, contre un écrou de blocage 31 qui est vissé sur le filetage extérieur d'une vis de réglage 32.

La vanne de dosage proprement dite comporte essentiellement un tiroir coulissant 33 constitué par un bloc comportant une surface supérieure 34 qui peut être plane ou avoir une autre forme, une surface inférieure plane 35 et un conduit traversant 36 ménagé entre la surface supérieure 34 et la surface inférieure 35. Ce tiroir 33 se déplace en translation, en coulissant sur une plaque 37 pourvue de deux canaux traversants 38 qui communiquent avec la sortie 14 de la matière dosée. Le tiroir 33 comporte par ailleurs dans ses faces latérales opposées, deux entailles profilées en V respectivement 39a et 39b dans lesquelles s'engagent respectivement les billes 28 et 30 et qui coopèrent avec ces dernières pour assurer un centrage précis dudit tiroir mobile. Ces entailles ont ou peuvent avoir une autre fonction qui sera décrite ci-dessous.

Le tiroir 33 est appuyé contre la surface supérieure de la plaque 37 par un ressort de compression 40 qui prend par ailleurs appui contre une pièce annulaire 41 pourvue de passage de communication 42 qui débouchent dans l'entrée 13 de la vanne de dosage.

Un joint profilé 43 garantit l'étanchéité entre la première partie 21 du poussoir et le corps 12 de la vanne de dosage. De façon identique un joint profilé 44 assure l'étanchéité entre la deuxième partie 23 du poussoir et le corps 12.

La figure 2 représente le poussoir 50 qui se compose comme mentionné précédemment d'une première partie 21, d'une deuxième partie 23 reliées rigidement entre elles par une partie centrale dans laquelle est ménagé un évidement 52. Dans cet évidement est essentiellement logé le tiroir coulissant 33 qui est formé d'un bloc comportant ladite face supérieure 34, ladite face inférieure plane 35, deux faces latérales 53 et 54 et deux faces d'extrémité 55 et 56 comportant respectivement les entailles profilées 39a et 39b dont la section transversale est de préférence en forme de V. Cette forme n'est cependant pas obligatoire et pourrait être différente dans certaines réalisations.

On notera que les billes 28 et 30 sont engagées dans lesdites entailles et assurent une fonction de centrage du tiroir coulissant.

Le conduit traversant 36 a une forme oblongue ou une section sensiblement rectangulaire et occupe, dans l'exemple représenté, une position quasi centrale.

La figure 3 représente une vue en perspective du ressort de compression 40 qui prend appui sur la face supérieure du tiroir correspondant 33 et de la pièce annulaire 41 qui est montée dans le corps 12 sous bloc 15.

Dans la pratique, le dispositif de dosage fonctionne de la manière suivante : la matière à doser est amenée dans l'entrée 13 par des moyens appropriés (non représentés) tels que par exemple un conduit connecté à un réservoir. Elle s'écoule dans une chambre 45 ménagée à l'intérieur de la cavité centrale 18 à travers les passages de communication 42. Elle peut ensuite s'écouler vers l'un des canaux traversants 38 en passant par le conduit traversant 36 du tiroir mobile. Comme les canaux 38 débouchent dans la sortie 14, l'écoulement de la matière dosée s'effectue librement par cette voie.

La position du tiroir mobile est définie de manière très précise par la poussée commandée par les moyens moteurs et par le ressort de rappel qui exerce une contre-poussée sur ce tiroir.

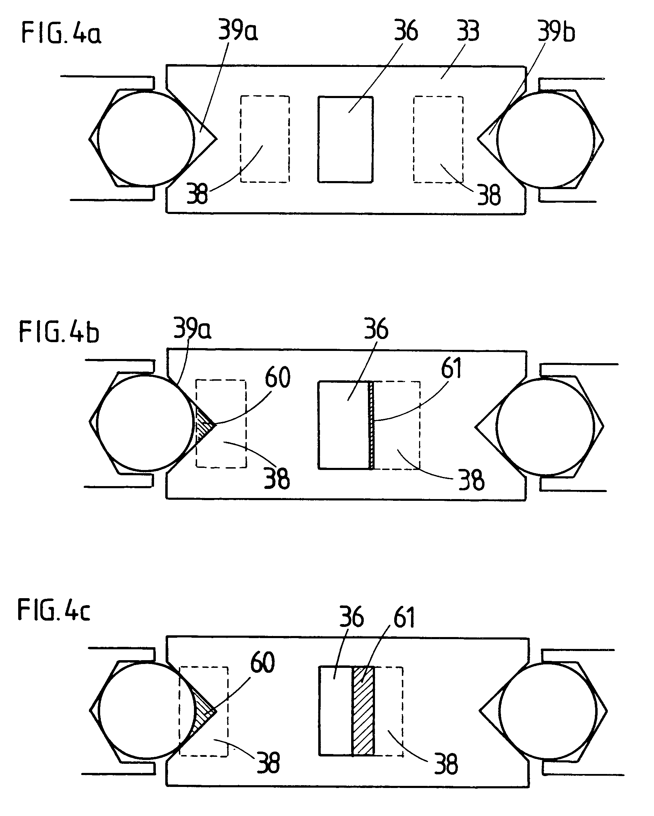

Les figures 4A, 4B et 4C illustrent le fonctionnement de ce dispositif. Dans la figure 4A, le tiroir 33 est au repos et la vanne de dosage est fermée. Le conduit traversant 36 est obturé par la plaque fixe 37. De même, les entailles 39a et 39b sont obturées à leur base par la plaque fixe 37. Les canaux traversants 38 de la plaque fixe 37 sont obturés par la face inférieure plane du tiroir.

Dans la position représentée par la figure 4B, le tiroir a été légèrement repoussé et la pointe 60 de l'entaille 39a recouvre partiellement l'un des canaux traversants 38, ce qui permet un écoulement modéré de matière. De même, on constate un petit recouvrement 61 entre le conduit traversant 36 et un canal traversant 38 de la plaque fixe 37. Dans cette position, on assure un dosage fixe.

Dans la position illustrée par la figure 4C, le recouvrement amorcé précédemment est plus complet, ce qui permet un écoulement plus rapide et par conséquent un dosage plus important.

Le déplacement du tiroir mobile s'effectue sans jeu. Le frottement du tiroir, qui est en fait la seule pièce mobile de la vanne de dosage proprement dite, sur la pièce fixe qui est la plaque 37, est un frottement s'effectuant entre des surfaces planes polies, sans aucun jeu, donc sans fuite. De ce fait, l'usure de cette pièce étant négligeable, la durée de vie de la vanne de dosage et, par conséquent, de l'ensemble du dispositif de dosage est fortement augmentée par rapport aux systèmes connus. En outre, le nombre de pièces composant le dispositif est relativement limité et leur usinage tout à fait traditionnel. De préférence, le tiroir et la plaque fixe peuvent être faits en céramique permettant d'avoir ainsi une bonne étanchéité entre les deux surfaces en contact et très peu d'usure.

Il est bien entendu que la présente invention n'est pas limitée à la forme de réalisation décrite, mais peut subir différentes modifications et se présenter sous diverses variantes évidentes pour l'homme de l'art. En particulier, la forme et la dimension des pièces mécaniques qui commandent le déplacement du tiroir mobile pourraient être changées. La forme même du bloc constituant le tiroir mobile pourrait être quelque peu modifiée à condition que l'on préserve l'existence de la surface supérieure plate 34 et de la surface inférieure 35, ainsi que celle du canal 36.

On pourra notamment simplifier la construction du poussoir notamment au niveau de l'étanchéité. Il est possible de laisser le produit à doser occuper la totalité de la cavité 18 et assurer uniquement l'étanchéité par rapport à l'extérieur. Une telle construction diminue aussi bien le coût de fabrication que le coût de maintenance d'un tel dispositif.

## Revendications

1. Dispositif de dosage micrométrique (10) comportant un corps (12) de vanne (11) de dosage, une entrée (13) de matière à doser, une sortie (14) de la matière dosée et une vanne (11) de dosage montée à l'intérieur dudit corps (12) entre ladite entrée (13) et ladite sortie (14) et susceptible d'être ouverte ou fermée, caractérisé en ce que ladite vanne (11) de dosage comporte une plaque fixe (37) pourvue d'une surface plane et équipée d'au moins un canal (38) communiquant avec ladite sortie (14) de matière dosée et un tiroir coulissant (33) en translation pourvu d'une face plane (35) disposée en appui sur ladite surface plane de la plaque fixe (37), ce tiroir (33) comprenant au moins un moyen de passage (39a, 39b, 36) agencé pour permettre l'écoulement de la matière à doser vers ledit canal (38) de la plaque fixe, lorsqu'il se trouve dans une des positions correspondant à l'ouverture de la vanne (11) de dosage et pour empêcher cet écoulement lorsqu'il se trouve dans une des positions correspondant à la fermeture de cette vanne, et ledit moyen de passage du tiroir (33) comporte au moins une entaille traversante profilée (39a, 39b), ménagée dans au moins une des faces latérales d'extrémité (55, 56), dans la direction de translation de ce tiroir, reliant ladite face plane (35) à ladite face opposée (34).

2. Dispositif selon la revendication 1, caractérisé en ce que ladite entaille (39a, 39b) profilée a une section transversale au moins approximativement en forme de V.

3. Dispositif selon l'une des revendications 1 ou 2, caractérisé en ce que le passage du tiroir (33) comporte, outre l'entaille traversante profilée (39a, 39b), au moins un conduit (36) traversant débouchant, d'une part, sur ladite face plane (35) et, d'autre part, sur une face opposée (34) de ce tiroir pour communiquer avec ladite entrée (13) de matière à doser.

4. Dispositif selon les revendications 2 et 3, caractérisé en ce que ledit tiroir (33) est constitué par un bloc comportant une face inférieure (35) qui constitue ladite face plane en appui sur ladite surface plane de la plaque (37) fixe, une face supérieure (34) opposée à ladite face inférieure, deux faces latérales (53, 54) et deux faces d'extrémité (55, 56) comportant chacune une entaille traversante (39a, 39b) à section transversale approximativement en forme de V.

5. Dispositif selon la revendication 1, caractérisé en ce que ledit tiroir (33) coulissant est associé à des moyens moteurs (22) agencés pour le déplacer linéairement dans un sens, et à un ressort de rappel (24) agencé pour le déplacer linéairement dans le sens opposé.

6. Dispositif selon la revendication 5, caractérisé en ce que ledit bloc constituant le tiroir (33) est monté dans une cavité centrale (52) ménagée à l'intérieur d'un poussoir longitudinal (21, 23), ce poussoir ayant une première extrémité (27) en appui contre lesdits moyens moteurs (22) et une deuxième extrémité (29) en appui contre ledit ressort (24) de rappel.

7. Dispositif selon la revendication 5, caractérisé en ce que lesdits moyens moteurs (22) sont des moyens électriques, ou pneumatiques ou hydrauliques ou électromécaniques.

8. Dispositif selon la revendication 6, caractérisé en ce que ledit bloc constituant le tiroir (33) est monté dans ladite cavité centrale (52) entre deux billes (28, 30) de centrage respectivement engagées dans les entailles profilées (39a, 39b) ménagées dans les faces d'extrémité (55, 56) de ce bloc.

9. Dispositif selon la revendication 4, caractérisé en ce qu'il comporte un ressort de compression (40) agencé pour exercer une pression sur la face supérieure plane (34) du bloc du tiroir (33).

10. Dispositif selon la revendication 9, caractérisé en ce que ledit ressort (40) de compression est monté entre une bague d'appui (41) comportant une surface disposée en contact avec la surface supérieure (34) du bloc formant ledit tiroir (33) coulissant et une pièce pourvue d'au moins un passage (42) de communication avec ladite entrée (13) de matière à doser.

11. Dispositif selon la revendication 10, caractérisé en ce que la bague d'appui (41) comporte au moins un téton de liaison agencé pour être engagé dans le conduit (36) traversant dudit tiroir (33).

12. Dispositif selon l'une des revendications 1 à 11, caractérisé par le fait que le tiroir (33) et la plaque fixe (37) sont en céramique.

## Claims

1. A micrometric metering device (10) comprising a body (12) of a metering valve (11), an inlet (13) for material to be metered, an outlet (14) for the metered material and a metering valve (11) mounted inside said body (12) between said inlet (13) and said outlet (14) and capable of being opened or closed, characterized in that said metering valve (11) comprises a fixed plate (37) provided with a plane surface and equipped with at least one duct (38) communicating with said outlet (14) for metered material and a slide valve (33) moving in translation provided with a plane face (35) disposed to bear on said plane surface of the fixed plate (37), this slide valve (33) comprising at least one passage means (39a, 39b, 36) arranged so as to permit the flow of the material to be metered towards said duct (38) of the fixed plate, when it is in one of the positions corresponding to the opening of the metering valve (11) and to stop this flow when it is in one of the positions corresponding to the closing of this valve, and said passage means of the slide valve (33) comprises at least one crossing profiled recess (39a, 39b) formed in at least one of the outside end faces (55, 56), in sliding direction of this slide valve, connecting said plane (35) face to said opposite face (34).

2. The device as claimed in claim 1, characterized in that said profiled recess (39a, 39b) has a cross section at least approximately in the form of a V.

3. The device as claimed in either of claims 1 and 2, characterized in that said passage of the slide valve (33) comprises beyond the crossing profiled recess (39a, 39b) at least one traversing conduit (36) emerging, on the one hand, on said plane face (35) and, on the other hand, on an opposite face (34) of this slide valve in order to communicate with said inlet (13) for material to be metered.

4. The device as claimed in claims 2 and 3, characterized in that said slide valve (33) is constituted by a block comprising a lower face (35) which constitutes said plane face bearing on said plane surface of the fixed plate (37), an upper face (34) opposite to said lower face, two lateral faces (53, 54) and two end faces (55, 56) each comprising a crossing recess (39a, 39b) having a cross section approximately in the form of a V.

5. The device as claimed in claim 1, characterized in that said slide valve (33) is associated with driving means (22) arranged so as to linearly displace it in one direction, and with a return spring (24) arranged so as to linearly displace it in the opposite direction.

6. The device as claimed in claim 5, characterized in that said block constituting the slide valve (33) is mounted in a central cavity (52) formed inside a longitudinal pusher (21, 23), this pusher having a first end (27) bearing against said driving means (22) and a second end (29) bearing against said return spring (24).

7. The device as claimed in claim 7, characterized in that said driving means (22) are electrical or pneumatic or hydraulic or electromechanical means.

8. The device as claimed in claim 6, characterized in that said block constituting the slide valve (33) is mounted in said central cavity (52) between two centering balls (28, 30) respectively engaged in the profiled recesses (39a, 39b) formed in the end faces (55, 56) of this block.

9. The device as claimed in claim 4, characterized in that it comprises a compression spring (40) arranged so as to exert a pressure on the plane upper face (34) of the block (33).

10. The device as claimed in claim 9, characterized in that said compression (40) is mounted between a bearing ring (41) comprising a surface disposed in contact with the upper surface (34) of the block forming said slide valve (33) and a part provided with at least one passage (42) for communication with said inlet (13) for material to be metered.

11. The device as claimed in claim 10, characterized in that the bearing ring (41) comprises at least one connecting nipple arranged so as to be engaged in the traversing conduit (36) of said slide valve (33).

12. The device as claimed in one of claims 1 to 11, characterized in that the slide valve (33) and the fixed plate (37) are made of a ceramic material.

## Patentansprüche

1. Mikrometrische Dosiervorrichtung (10) mit einem Körper (12) eines Dosierventils (11), einem Eingang (13) für den zu dosierenden Stoff, einem Ausgang (14) für den dosierten Stoff und einem Dosierventil (11), das zwischen dem genannten Eingang (13) und dem genannten Ausgang (14) im Inneren des genannten Körpers (12) montiert ist und geöffnet oder geschlossen werden kann, dadurch gekennzeichnet, dass das genannte Dosierventil (11) mit einer festen Platte (37) und einem Schieber 33 versehen ist, wobei die Platte (37) eine ebene Fläche und wenigstens einen mit dem genannten Ausgang für den dosierten Stoff in Verbindung stehenden Kanal (38) aufweist und der Schieber (33) translatorisch verschiebbar ist und eine sich auf der genannten ebenen Fläche der festen Platte (37) abstützende ebene Seite (35) sowie wenigstens ein Durchflussmittel (39a, 39b, 36) aufweist, welches dazu eingerichtet ist, um das Fliessen des zu dosierenden Stoffes in Richtung des genannten Kanals (38) der festen Platte zu erlauben, wenn es sich in einer der Positionen befindet, die der Oeffnung des Dosierventils (11) entspricht, und um dieses Fliessen zu verhindern, wenn es sich in einer der Positionen befindet, die dem Verschluss des Dosierventils entspricht, und wobei das genannte Durchflussmittel des Schiebers (33) wenigstens einen profilierten, durchquerenden Schlitz (39a, 39b) aufweist, der in wenigstens einer der seitlichen, in der Verschiebungsrichtung dieses Schiebers liegenden Endflächen (55, 56) vorgesehen ist und die genannte ebene Seite (35) mit der entgegengesetzten Seite (34) verbindet.

2. Vorrichtung nach Anspruch 1, dadurch gekennzeichnet, dass der genannte profilierte Schlitz (39a, 39b) einen Querschnitt hat, der ungefähr die Form eines V aufweist.

3. Vorrichtung nach einem der Ansprüche 1 oder 2, dadurch gekennzeichnet, dass der Durchfluss des Schiebers (33) ausser dem durchquerenden profilierten Schlitz (39a, 39b) wenigstens eine durchquerende Leitung (36) aufweist, welche einerseits auf der genannten ebenen Seite (35) und andererseits auf einer entgegengesetzten Seite (34) dieses Schiebers mündet, um mit dem genannten Eingang (13) für den zu dosierenden Stoff in Verbindung zu stehen.

4. Vorrichtung nach den Ansprüchen 2 und 3, dadurch gekennzeichnet, dass der genannte Schieber (33) aus einem Block besteht, der eine untere Fläche (35), die die genannte ebene Seite bildet, welche auf der genannten ebenen Fläche der festen Platte (37) aufliegt, eine obere, der genannten unteren Fläche entgegengesetzte Fläche (34), zwei seitliche Flächen (53, 54) und zwei Endflächen (55, 56) aufweist, wobei jede Endfläche mit einem durchquerenden Schlitz (39a, 39b) versehen ist, dessen Querschnitt ungefähr V-förmig ist.

5. Vorrichtung nach Anspruch 1, dadurch gekennzeichnet, dass der genannte Schieber (33) mit Antriebsmittel (22) für seine lineare Bewegung in eine Richtung und mit einer Rückstellfeder (24) für seine lineare Bewegung in der entgegengesetzten Richtung verbunden ist.

6. Vorrichtung nach Anspruch 5, dadurch gekennzeichnet, dass der genannte, den Schieber (33) bildende Block in einer zentralen, im Innern eines längsgerichteten Stössels (21, 23) eingearbeiteten Aushöhlung (52) montiert ist, wobei dieser Stössel ein erstes, sich auf den genannten Antriebsmitteln (22) abstützendes Ende (27) und ein zweites, sich auf der genannten Rückstellfeder (24) abstützendes Ende (29) aufweist.

7. Vorrichtung nach Anspruch 5, dadurch gekennzeichnet, dass die genannten Antriebsmittel (22) elektrische, pneumatische, hydraulische oder elektromechanische Mittel sind.

8. Vorrichtung nach Anspruch 6, dadurch gekennzeichnet, dass der genannte, den Schieber (33) bildende Block in der genannten zentralen Aushöhlung (52) zwischen zwei Zentrierkugeln (28, 30) montiert ist, welche in die entsprechenden profilierten Schlitze (39a, 39b), die in die Endflächen (55, 56) dieses Blockes verarbeitet sind, eingreifen.

9. Vorrichtung nach Anspruch 4, dadurch gekennzeichnet, dass sie mit einer Druckfeder (40) versehen ist, die zur Ausübung eines Druckes auf die obere ebene Fläche (34) des Schieberblocks (33) ausgebildet ist.

10. Vorrichtung nach Anspruch 9, dadurch gekennzeichnet, dass die genannte Druckfeder (40) zwischen einem Stützring (41), der eine Fläche aufweist, die in Kontakt mit der oberen Fläche (34) des den Schieber bildenden Blocks steht, und einem Teil mit wenigstens einem Durchfluss (42) für die Verbindung mit dem genannten Eingang des zu dosierenden Stoffs montiert ist.

11. Vorrichtung nach Anspruch 10, dadurch gekennzeichnet, dass der Stützring (41) mit wenigstens einem Verbindungsansatz versehen ist, der dazu eingerichtet ist, um in die den genannten Schieber (33) durchquerende Leitung (36) eingeführt zu werden.

12. Vorrichtung nach einem der Ansprüche 1 bis 11, dadurch gekennzeichnet, dass der Schieber (33) und die feste Platte (37) aus Keramik sind.
